# EUROPEAN PATENT SPECIFICATION

(11) **EP 0 921 976 B1**
(45) Date of publication and mention of the grant of the patent: **24.10.2001**
(21) Application number: 97936912.1
(22) Date of filing: 28.08.1997
(51) Int. Cl.: B62D 21/14

(54) **VEHICLE CHASSIS**
FAHRZEUGRAHMEN
CHASSIS DE VEHICULE

(30) Priority: 30.08.1996 SE 9603161
(43) Date of publication of application: 16.06.1999
(73) Proprietor: Scania CV Aktiebolag (publ), 151 87 Södertälje (SE)
(72) Inventor: EKLUND, Hans, S-641 51 Katrineholm (SE)
(74) Representative: Waldebäck, Hans Olov
(86) International application number: SE9701425
(87) International publication number: WO9808728

(56) References cited:
- DE-C- 351 056
- GB-A- 319 484

## Description

The present invention relates to a vehicle chassis in accordance with the preamble to the main claim.

### State of the art

Vehicle chassis of this kind are known, for instance from GB-C-31948 and are usually intended to have bus bodies mounted on them. In many cases a bus purchaser wishes to have a special bus body which is manufactured by a separate body builder, in which case the complete chassis has to be transported to the selected independent body builder to enable the vehicle body to be mounted on it.

A known practice in the Manufacture of bus chassis for subsequent delivery to independent body builders is to make the chassis in the form of a front module and a rear module which are connected together by a standard intermediate section (a transport frame) which keeps the modules together during the journey to the body builder. The latter then has in a suitable manner to separate the modules and join them together so as to achieve the desired spacing between axles. If the bus is to be provided with a continuous baggage space or a large low-floor section between its axles, its body is used as a self-supporting linking element between the front and rear axle modules.

A known practice if the bus chassis is intended to be provided with a body supported by the chassis frame between the axles is chassis manufacture in a number of predetermined frame lengths. If the body requires some other frame length, the body builder has to cut the fixed frame, create in it configurations of holes corresponding to the desired axle spacings and fasten extension elements between the modules before the mounting of the body can commence. The whole operation requires precision and is time-consuming, since the parts concerned are relatively heavy and difficult to handle. As they will also be largely purpose-made for the respective type of body, the operation as a whole will be relatively expensive to carry out. This known technology involves the chassis manufacturer in expensive manufacturing and stockholding of numerous frame members manufactured in relatively short production runs.

One object of the present invention is to enable body builders to adapt chassis to desired frame lengths. A further object is to provide a cost-effective solution for the chassis manufacturer. The invention has particularly advantageous applications in chassis with full-length frames for heavy buses in that a large number of body variants with different axle spacings can be derived from a given type of chassis.

### Brief description of the invention

This solution is distinguished by what is indicated in the characterising part of the main claim, and involves using an intermediate frame and associated connecting elements to join together the front and rear modules. This provides the body builder with the possibility of choosing axle spacings freely from among the dimensions most commonly arising for this type of vehicle. The chassis manufacturer can thus achieve a standardised cost-effective solution at relatively low cost.

In one advantageous embodiment the intermediate frame is so designed as to exhibit the same frame height as the front and rear modules. This makes it possible to mount on the chassis a bus body which has the same floor height along much of the frame.

In another advantageous embodiment the linking elements are mutually identical, with a number of pairs of holes situated symmetrically along the waist of a channel section. This results in cost-saving standardisation of the constituent parts.
In a further advantageous embodiment the linking elements are telescopically insertable in the channel-section side members of the respective module, thereby substantially facilitating not only the fitting and positional adjustment of the linking elements in the frame side members but also evenly distributed transmission of forces between the various parts.

Other features distinguishing the invention are indicated in the attached patent claims and in the description below of an embodiment of the invention.

### List of drawings

An advantageous embodiment of the invention is described below with reference to the attached drawings, which are as follows:
Figure 1 depicts schematically a vehicle chassis according to the invention with front and rear modules connected by an intermediate frame and linking elements, and
Figure 2 shows a perspective view of the chassis frame in a position in which the cooperating parts result in a longer vehicle chassis variant than the chassis according to Figure 1.

### Description of an embodiment

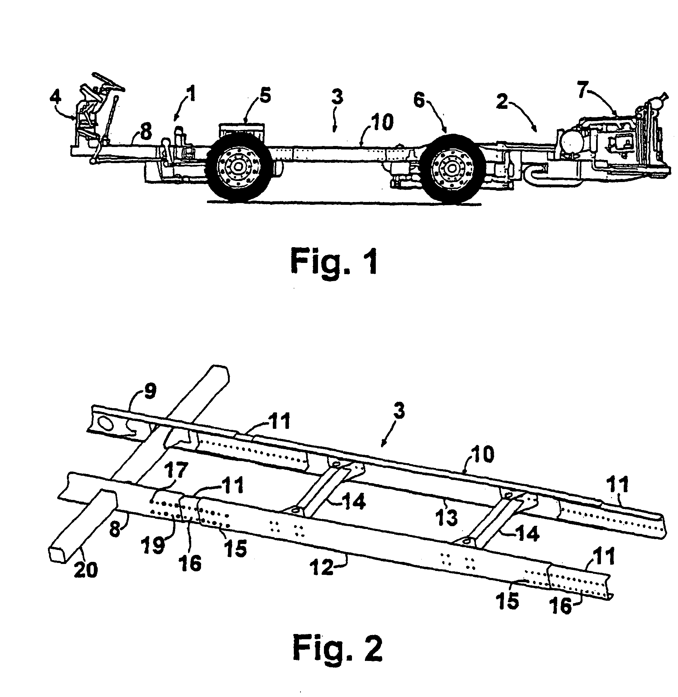

A vehicle chassis according to the invention and intended for the subsequent mounting of a bus body on it is depicted schematically in Figure 1. The chassis has a front section 1 and a rear section 2 which are connected by an intermediate section 3. The front section 1 has a driving compartment unit 4 and a front axle unit 5, while the rear section 2 incorporates a rear axle unit 6 and a drive unit 7. The front and rear sections each have two frame side members 8, 9 running in the longitudinal direction of the vehicle on either side of its longitudinal symmetry plane.

The intermediate section 3 consists of an intermediate frame 10 and linking elements 11. In this embodiment four linking elements 11 are used to connect the intermediate section 3 to the front section 1 and the rear section 2.

The intermediate frame 10 also incorporates two frame side members 12, 13, which with advantage have channel sections with the same cross-sectional dimensions as the frame side members 8, 9 of the front and rear sections. The frame side members 12, 13 of the intermediate frame 10 thus form direct extensions of the respective frame side members 8, 9 of the front and rear sections 1 and 2, and all the frame side members 8, 9, 12, 13 have upper limiting surfaces which are situated in a single horizontal plane. The result is a substantially planar section between the axle units 5, 6 which facilitates the subsequent mounting of a vehicle body.

The intermediate frame 10 is further provided with at least one cross-member 14 (there are two of them in the embodiment depicted) enabling the intermediate frame 10 to serve as a fully operative part of a subsequent vehicle complete with body.

The frame side members 12, 13 of the intermediate frame 10 are each provided at their ends with at least one pair of holes 15, preferably in the form of two holes situated in the same vertical plane. Correspondingly, each of the frame side members 8, 9 of the front and rear sections are provided, at their ends directed towards one another, with at least one pair of holes 19. One advantageous embodiment incorporates at least three pairs of holes situated in the waist of the channel section at each of the aforesaid ends of members.

The linking elements 11 each take the form of channel-section members with cross-sections which make it possible for the linking elements to be telescopically inserted into, or pushed onto the outside of, the ends of the front and rear sections and the frame side members 8, 9, 12, 13 of the intermediate frame 10. In the chassis depicted in the drawings the channel sections of the linking elements 11 have a smaller cross-section than the frame side members 8, 9, 12, 13 of the front and rear sections and the intermediate frame 10. The linking elements 11 are accordingly inserted in the aforesaid ends of the frame side members, and the respective channel sections are adapted to cooperate in the transmission of forces.

Each linking element 11 is further provided with a number of pairs of holes 16 which are with advantage situated along the whole of its length so that the linking elements are consequently identical in appearance, thereby creating a cost-effective solution for the chassis manufacturer. The pairs of holes 16 are dimensioned and positioned so that when the linking elements 11 are inserted in the ends of the frame side members of the intermediate frame 10 and the front and rear axle sections they reach a position halfway between the respective pairs of holes 15 and 19 in the aforesaid frame side member ends. This means that when two or more of the pairs of holes 15, 19 and 16 are accommodated by the respective frame side member ends and linking elements 11, they then have the same between-centres spacing in the longitudinal direction. Alternatively the pairs of holes 16 in the linking elements may have a between-centres spacing which is an even multiple of the between-centres spacing between the pairs of holes 19 at the ends of the frame side members of the intermediate frame 10 or the front or rear sections 1, 2. The ratio between the between-centres spacings of the pairs of holes may of course also be the inverse. It is advantageous to adopt a between-centres spacing of 50 mm for the pairs of holes 16, which is found to result in good flexibility for achieving most of the axle spacings which may arise in the subsequent vehicle body mounting operation.

The length of the linking elements 11 is with advantage substantially the same as the minimum distance between two successive cross-members 20, 14 in the bus chassis version which has the minimum axle spacing, i.e. the version depicted in Figure 1. The forces acting on the linking elements 11 do of course have to be distributed as evenly as possible, which makes it advantageous for a maximum of a middle third of their length to be clear of the ends of the frame side members when the chassis has the maximum length.

Conventional fastening connections 17, e.g. bolted connections, may then be used to connect the linking elements 11, the intermediate frame 10 and the front and rear sections 1, 2 together, preferably at three successive pairs of holes 15, 16, 19. Bolted connections result in a standard form of chassis for transporting to body builders. It will be easy for the latter to release the bolted connections 17 in order to adjust the chassis length to the desired dimension before mounting the body on the chassis. The body builder need neither make accurately located holes nor fit separate parts to the chassis to make it ready for mounting the body on.

Within the scope of the inventive step, the linking elements 11 may also be joined to an undepicted cross-member to make them easier to handle during chassis manufacture and during the body builder's chassis length adjustment work.

## Claims

1. Vehicle chassis which is intended to have a body mounted on it and is divided into front and rear sections (1, 2) which each have two longitudinal frame side members (8, 9) whereby the frame side members of the front section (1) have ends directed towards corresponding ends of the frame side members of the rear section (2), which frame side member ends are connected together by a releasable intermediate section (3), with fastening connections (17) which run through first holes (19) at the ends of the divided frame side members (8, 9) and second holes (16) in beam portions of the intermediate section (3) which cooperate with said ends, ***characterised* in that** the intermediate section (3) incorporates not only an intermediate frame (10) but also at least two linking elements (11) which connect the ends of the intermediate frame (10) to the ends of the frame side members of the front and rear sections (1, 2), that the intermediate frame (10) has side members (12, 13) with at least several third holes (15) in each of its ends directed towards the ends of the frame side. members of the chassis front and rear sections (1,2), and that the linking elements (11) have beam portions which each have said second holes (16) situated in the longitudinal direction after one another and adapted to cooperate not only with said first holes (19) but also with said third holes (15) so that the length of the vehicle chassis is adjustable by adopting any combination of positions of the holes (15, 16, 19).

2. Vehicle chassis according to patent claim 1, ***characterised* in that** the side members (12, 13) of the intermediate frame (10) have an upper limiting surface situated substantially in a single horizontal plane which coincides substantially with a horizontal plane in which the upper limiting surface of the ends of the members of the chassis front and rear sections (1,2) is situated.

3. Vehicle chassis according to claim 2, ***characterised* in that** the intermediate frame (10) has side members (12, 13) having the same dimensions as, and situated in the extension of, the chassis frame side members (8, 9).

4. Vehicle chassis according to either of patent claims 2 and 3, ***characterised* in that** the side members (12, 13) of the chassis and the intermediate frame (10) are channel sections with vertical webs and that the beam portions of the linking elements (11) are telescopically insertable in said side members (12, 13).

5. Vehicle chassis according to patent claim 4, ***characterised* in that** the linking elements (11) take the form of four separate channel-section members and the intermediate frame (10) is composed of two frame side members (12, 13) and at least one cross-member (14).

6. Vehicle chassis according to patent claim 5, ***characterised* in that** the first, second and third holes (19, 16, 15) take the form of pairs of holes, with the pairs of holes (16) in the linking elements (11) being accommodated along the whole length of the latter and having uniform between-centres spacing which is an even multiple of the between-centres spacing of the pairs of holes (15;19) accommodated in the frame side members of the intermediate frame (10) and in the ends of the frame side members of the front and rear sections (1,2).

7. Vehicle chassis according to any one of the foregoing patent claims, ***characterised* in that** the length of the linking elements (11) corresponds essentially to the distance between two cross-members (20, 14) when the vehicle chassis is adjusted to its minimum length.

## Patentansprüche

1. Fahrzeug-Fahrgestell, an dem eine Karosserie montiert werden soll und das in ein vorderes und hinteres Segment (1, 2) geteilt ist, die je zwei längsgerichtete Rahmenseitenteile (8, 9) aufweisen, wobei die Rahmenseitenteile des vorderen Segments (1) Enden aufweisen, die auf entsprechende Enden der Rahmenseitenteile des hinteren Segments (2) ausgerichtet sind, welche Enden von Rahmenseitenteilen durch ein lösbares Zwischensegment (3) mit Befestigungsverbindungen (17) miteinander verbunden sind, die durch erste Löcher (19) an den Enden der geteilten Rahmenseitenteile (8, 9) und zweite Löcher (16) in Trägerabschnitten des Zwischensegments (3) verlaufen, welche mit den Enden zusammenwirken, **dadurch *gekennzeichnet,* daß** das Zwischensegment (3) nicht nur einen Zwischenrahmen (10), sondern auch zumindest zwei Verbindungselemente (11) enthält, welche die Enden des Zwischenrahmens (10) mit den Enden der Rahmenseitenteile des vorderen und hinteren Segments (1, 2) verbinden, der Zwischenrahmen (10) Seitenteile (12, 13) mit zumindest mehreren dritten Löchern (15) in jedem seiner Enden aufweist, die in Richtung auf die Enden der Rahmenseitenteile der vorderen und hinteren Segmente (1, 2) des Fahrgestells gerichtet sind, und die Verbindungselemente (11) Trägerabschnitte aufweisen, welche jeweils die zweiten Löcher (16) aufweisen, die in der Längsrichtung hintereinander liegen und dafür angepaßt sind, nicht nur mit den ersten Löchern (19), sondern auch mit den dritten Löchern (15) zusammenzuwirken, so daß die Länge des Fahrgestells des Fahrzeugs durch Nutzen einer beliebigen Kombination von Lagen der Löcher (15, 16, 19) einstellbar ist.

2. Fahrzeug-Fahrgestell nach Anspruch 1, **dadurch *gekennzeichnet,* daß** die Seitenteile (12, 13) des Zwischenrahmens (10) eine obere Begrenzungsfläche aufweisen, die im wesentlichen in einer einzigen horizontalen Ebene liegt, welche im wesentlichen mit einer horizontalen Ebene zusammenfällt, in der die obere Begrenzungsfläche der Enden der Teile der vorderen und hinteren Segmente (1, 2) des Fahrgestells liegt.

3. Fahrzeug-Fahrgestell nach Anspruch 2, **dadurch gekenn*zeichnet,* daß** der Zwischenrahmen (10) Seitenteile (12, 13) aufweist, welche die gleichen Abmessungen wie die Rahmenseitenteile (8, 9) des Fahrgestells haben und in deren Verlängerung liegen.

4. Fahrzeug-Fahrgestell nach einem der Ansprüche 2 und 3, ***dadurch gekennzeichnet, daß*** die Seitenteile (12, 13) des Fahrgestells und der Zwischenrahmen (10) Hohlprofile mit vertikalen Stegen sind und die Trägerabschnitte der Verbindungselemente (11) in die Seitenteile (12, 13) teleskopartig einführbar sind.

5. Fahrzeug-Fahrgestell nach Anspruch 4, **dadurch *gekennzeichnet,* daß** die Verbindungselemente (11) die Form von vier getrennten Hohlprofilelementen haben und der Zwischenrahmen (10) sich aus zwei Rahmenseitenteilen (12, 13) und zumindest einem Querträger (14) zusammensetzt.

6. Fahrzeug-Fahrgestell nach Anspruch 5, **dadurch *gekennzeichnet,* daß** die ersten, zweiten und dritten Löcher (19, 16, 15) die Form von Lochpaaren aufweisen, wobei die Paare Löcher (16) in den Verbindungselementen (11) entlang der gesamten Länge der letztgenannten angeordnet sind und einen gleichmäßigen Mittenabstand aufweisen, der ein ganzzahlig Vielfaches des Mittenabstands der Paare Löcher (15, 19) ist, die in den Rahmenseitenteilen des Zwischenrahmens (10) und in den Enden der Rahmenseitenteile der vorderen und hinteren Segmente (1, 2) angeordnet sind.

7. Fahrzeug-Fahrgestell nach einem der vorhergehenden Ansprüche, **dadurch gekennzeichnet, daß** die Länge der Verbindungselemente (11) im wesentlichen der Distanz zwischen zwei Querträgern (20, 14) entspricht, wenn das Fahrzeug-Fahrgestell auf seine minimale Länge eingestellt ist.

## Revendications

1. Châssis de véhicule qui est prévu pour avoir une carrosserie montée dessus et est divisé en sections avant et arrière (1, 2) qui ont chacune deux éléments latéraux de bâti longitudinal (8, 9) de sorte que les éléments latéraux de bâti de la section avant (1) ont des extrémités dirigées vers des extrémités correspondantes des éléments latéraux de bâti de la section arrière (2), lesquelles extrémités d'élément latéral de bâti sont reliées ensemble par une section intermédiaire démontable (3), avec des raccords de fixation (17) qui s'étendent à travers des premiers trous (19) aux extrémités des éléments latéraux de bâti divisé (8, 9) et des deuxièmes trous (16) dans des parties de longeron de la section intermédiaire (3) qui coopèrent avec lesdites extrémités, **caractérisé en ce que** la section intermédiaire (3) incorpore non seulement un bâti intermédiaire (10) mais également au moins deux éléments de liaison (11) qui relient les extrémités du bâti intermédiaire (10) aux extrémités des éléments latéraux de bâti des sections avant et arrière (1, 2), **en ce que** le bâti intermédiaire (10) a des éléments latéraux (12, 13) avec au moins plusieurs troisièmes trous (15) dans chacune de ses extrémités dirigées vers les extrémités des éléments latéraux de bâti des sections avant et arrière de châssis (1, 2), et **en ce que** les éléments de liaison (11) ont des parties de longeron qui ont chacune lesdits deuxièmes trous (16) situés dans la direction longitudinale après un autre et prévus pour coopérer non seulement avec lesdits premiers trous (19) mais également avec lesdits troisièmes trous (15) de telle sorte que la longueur du châssis de véhicule est réglable en adoptant une combinaison quelconque de positions des trous (15, 16, 19).

2. Châssis de véhicule selon la revendication 1, **caractérisé en ce que** les éléments latéraux (12, 13) du bâti intermédiaire (10) ont une surface de limitation supérieure située sensiblement dans un unique plan horizontal qui coïncide sensiblement avec un plan horizontal dans lequel est située la surface de limitation supérieure des extrémités des éléments des sections avant et arrière de châssis (1, 2).

3. Châssis de véhicule selon la revendication 2, **caractérisé en ce que** le bâti intermédiaire (10) a des éléments latéraux (12, 13) ayant les mêmes dimensions que et situés dans l'extension des éléments latéraux de bâti de châssis (8, 9).

4. Châssis de véhicule selon l'une des revendications 2 et 3, **caractérisé en ce que** les éléments latéraux (12, 13) du châssis et le bâti intermédiaire (10) sont des sections de profilé avec des âmes verticales et **en ce que** les parties de longeron des éléments de liaison (11) peuvent être insérées de manière télescopique dans lesdits éléments latéraux (12, 13).

5. Châssis de véhicule selon la revendication 4, **caractérisé en ce que** les éléments de liaison (11) prennent la forme de quatre éléments de section de profilé séparés et le bâti intermédiaire (10) se compose de deux éléments latéraux de bâti (12, 13) et d'au moins un élément transversal (14).

6. Châssis de véhicule selon la revendication 5, **caractérisé en ce que** les premiers, deuxièmes et troisièmes trous (19, 16, 15) prennent la forme de paires de trous, les paires de trous (16) dans les éléments de liaison (11) qui étant prévues sur toute la longueur de ces derniers et ayant un espacement entre centres uniforme qui est un multiple pair de l'espacement entre centres des paires de trous (15, 19) prévues dans les éléments latéraux de bâti du bâti intermédiaire (10) et dans les extrémités des éléments latéraux de bâti des sections avant et arrière (1, 2).

7. Châssis de véhicule selon l'une quelconque des revendications précédentes, **caractérisé en ce que** la longueur des éléments de liaison (11) correspond essentiellement à la distance entre deux éléments transversaux (20, 14) lorsque le châssis de véhicule est ajusté à sa longueur minimale.
